# EUROPÄISCHE PATENTSCHRIFT

(11) **EP 3 017 974 B1**
(45) Veröffentlichungstag und Bekanntmachung des Hinweises auf die Patenterteilung: **16.01.2019**
(21) Anmeldenummer: 15165899.4
(22) Anmeldetag: 30.04.2015
(51) Int. Cl.: B60G 7/00, F16C 11/06

(54) **QUERLENKER MIT KUGELGELENK IN EINPRESSVERBINDUNG**
TRANSVERSE CONTROL ARM WITH BALL JOINT IN PRESS-FIT CONNECTION
BRAS OSCILLANT TRANSVERSAL DOTÉ D'UNE ROTULE DANS UNE LIAISON INSÉRÉE EN FORCE

(30) Priorität: 05.11.2014 DE 102014222575
(43) Veröffentlichungstag der Anmeldung: 11.05.2016
(73) Patentinhaber: Ford Global Technologies, LLC, Dearborn, MI 48126 (US)
(72) Erfinder: Kurbel, Peter, 51491 Overath (DE); Meier, Christoph, 50859 Köln (DE)
(74) Vertreter: Illing, Rolf

(56) Entgegenhaltungen:
- EP-A1- 1 077 334
- EP-A2- 1 346 855
- US-A1- 2006 110 213
- US-A1- 2008 213 035
- US-A1- 2014 138 928
- US-A1- 2014 196 270
- US-B1- 8 757 648

## Beschreibung

Die vorliegende Erfindung betrifft einen Querlenker für eine Vorderradaufhängung eines Kraftfahrzeugs, wobei der Querlenker über ein Kugelgelenk in Einpressverbindung mit einem Radträger verbunden ist. Radaufhängungen verbinden die Räder mit dem Fahrgestell oder der selbstragenden Karosserie eines Kraftfahrzeugs. Einzelradaufhängungen bestehen im Gegensatz zu Starrachsen aus separaten Radaufhängungen zu den beiden Seiten eines zweispurigen Kraftfahrzeugs, so dass sich die Radstellungen auf den beiden Seiten nicht gegenseitig beeinflussen. Typischerweise sind Radaufhängungen aus sogenannten Lenkern aufgebaut, welche die Räder am Fahrgestell oder Karosserie horizontal fixieren. Dabei sind Querlenker wesentliche Bestandteile von Radaufhängungen, besonders von Vorderradaufhängungen. Ein Querlenker ist quer zur Fahrtrichtung eingebaut. Eine typische Form ist ein einschaliger Dreiecksquerlenker, bei dem zwei Anbindungsarme über Gummilager mit der Karosserie und ein Anbindungsarm über ein Gelenk, typischerweise ein Kugelgelenk, mit einem Radträger eines Rades verbunden sind (DE602004006080T2).

Kugelgelenke nehmen Kräfte aus mehreren Richtungen auf und übertragen Kräfte in mehrere Richtungen. Sie bestehen im Wesentlichen aus einem Gelenkzapfen, an dessen einem Ende eine Kugel ausgebildet ist, einer die Kugel des Zapfens aufnehmenden Schale und sowie einem die Schale und Teile des Kugelzapfens aufnehmenden Gelenkgehäuse. Die Kugel des Kugelzapfens gleitet in der vorgespannten, dauergeschmierten Schale, welche durch das Gehäuse gegen Feuchtigkeit und Verschmutzung geschützt ist (DE102005034210A1, DE102006002395A1).

Die Verbindung des Kugelgelenkgehäuses mit einem entsprechenden Anbindungsarm kann z. B. durch eine Einpressverbindung, eine Schweißverbindung, eine Schraubverbindung, eine Nietverbindung u. ä. umgesetzt werden. Die Einpressverbindung ist dabei die kostengünstigste Variante. Die Verbindung wird dabei durch Kraftschluss bewirkt. Allerdings hat die Einpressverbindung den signifikanten Nachteil, dass sie im Vergleich mit anderen Verbindungsarten einen hohen räumlichen Bedarf hat. Der hohe räumliche Bedarf ist durch die große Materialdicke der Wandung des Einpresssitzes bedingt, und durch den dadurch bedingten großen Biegeradius des Materials. Typischerweise ist der Einpresssitz ein tiefgezogener Zylinder im Material des Lenkers. Durch den hohen räumlichen Bedarf muss das eingepresste Kugelgelenk zwangsläufig weiter innerhalb der Fahrzeugdimensionen angeordnet werden als bei anderen Methoden. Dies wiederum hat einen negativen Effekt auf das Lenkverhalten des Fahrzeugs, da der Lenkrollhalbmesser nicht optimal gestaltet werden kann. Ideal ist dabei eine möglichst nahe Anordnung der Einpressverbindung an Radträger und Bremsscheibe. In der Patentschrift US 8,757,648 B1, die den Oberbegriff des Anspruchs 1 offenbart, wird eine Anordnung offenbart, in der an der

Außenseite des Querlenkers in Richtung der Bremsscheibe die Materialdicke reduziert ist, um Bewegungsfreiheit zwischen dem Querlenker und der Bremsscheibe zu gewährleisten. In der Offenlegungsschrift DE 10 2013 200 406 A1 wird ein Verfahren zum Herstellen eines Querlenkers offenbart, bei dem in einem Endabschnitt eine Einrichtung zur Aufnahme eines Kugelgelenks ausgebildet wird.

Es besteht damit die Aufgabe, eine Einrichtung für die Aufnahme eines Kugelgelenks durch Einpressen bereitzustellen, die unter Nutzung des im Vergleich zu anderen Verbindungsarten kostengünstigen Vorteils dabei einen günstigeren räumlichen Bedarf als herkömmliche Einpressverbindungen aufweist.

Diese Aufgabe wird durch einen Querlenker mit den Merkmalen des Hauptanspruchs gelöst. Weitere vorteilhafte Ausführungsformen der Erfindung ergeben sich aus den Nebenansprüchen, den Unteransprüchen, den Figuren und den Ausführungsbeispielen.

Ein erster Aspekt der Erfindung betrifft einen Querlenker eines Kraftfahrzeugs, umfassend eine radseitige Struktur zum Ankoppeln eines Rades mit einer eine Öffnung zur Aufnahme eines Kugelgelenks in Einpressverbindung aufweisenden Einrichtung, wobei die Wandung der Einrichtung in einem für einen kraftschlüssigen Kontakt mit dem Kugelgelenk vorgesehenen Bereich eine in Bezug auf die Materialdicke im übrigen Bereich der Wandung der Einrichtung verringerte Materialdicke in einem zur Bremsscheibe des anzukoppelnden Rades gerichteten Bereich aufweist und wobei die verringerte Materialdicke (3) durch eine trennungstechnisch hergestellte Vertiefung in Bezug auf den übrigen Bereich der inneren Oberfläche der Wandung der Einrichtung bei gleichmäßiger äußerer Oberfläche geformt ist.

Das Ausgangsmaterial des Querlenkers und damit auch der Einrichtung ist vorzugsweise ein Blech, d. h. ein flaches Werkstück aus Metall. Die Struktur des Querlenkers mit allen notwendigen Formen, darunter der Einrichtung zur
Aufnahme des Kugelgelenks, wird herkömmlicherweise in einem Werkzeug, das für die Durchführung aller notwendigen Bearbeitungsprozesse ausgebildet ist, erzeugt. Das Material der Einrichtung ist in dem zur Bremsscheibe des anzukoppelnden Rades gerichteten Bereich durch ein Trennverfahren so reduziert, dass die Materialdicke der Wandung der Einrichtung in Bezug auf die ursprüngliche Materialdicke an dieser Stelle geringer ist als im übrigen Bereich der Wandung der Einrichtung. Diese Reduktion der Materialdicke ist vorteilhaft, weil sie eine Einpressverbindung mit dem Kugelgelenk ermöglicht, die im Vergleich mit herkömmlichen Einpressverbindungen näher an der Bremsscheibe angeordnet werden kann. Dadurch kann vorteilhafterweise das Fahrverhalten entsprechender Kraftfahrzeuge positiv beeinflusst werden. Gleichzeitig wird durch Erhalten der Materialdicke im übrigen Bereich der Wandung der Einrichtung verglichen mit Einrichtungen, deren Materialdicke vollständig reduziert ist, vorteilhaft eine höhere Stabilität der Einpressverbindung erreicht. Dadurch kann die Einrichtung verglichen mit herkömmlichen Einrichtungen bei geringerer Breite, d. h. geringerem Außendurchmesser der Einrichtung in dem für den kraftschlüssigen Kontakt mit dem Kugelgelenk vorgesehenen Bereich, und damit geringerem räumlichen Bedarf, mit dem Kugelgelenk in einer Einpressverbindung verbunden sein.

Mit anderen Worten ist das Material durch die Ausbildung einer Vertiefung im inneren Bereich so reduziert, dass vorteilhaft eine nähere räumliche Anordnung der Einrichtung und damit der Verbindung von Querlenker und Rad des entsprechenden Kraftfahrzeugs an der Bremsscheibe des Rades ermöglicht wird.

Vorzugsweise ist bei dem Querlenker der für den kraftschlüssigen Kontakt mit dem Kugelgelenk vorgesehene Bereich die Öffnung der Einrichtung. Dabei ist das Material vorteilhafterweise in Richtung der Bremsscheibe des anzukoppelnden Rades reduziert.

Weiterhin ist der erfindungsgemäße Querlenker vorzugsweise einschalig. Einschalige Querlenker sind vorteilhafterweise einfach und kostengünstig herstellbar, und zeichnen sich durch ein geringes Gewicht aus.

Weiterhin ist der erfindungsgemäße Querlenker zusammen mit der Einrichtung vorzugsweise als einstückiges Blechelement ausgebildet. Dazu liegt das Material des gesamten Querlenkers vor dem Umformen aus einer Blechplatine geschnitten, bevorzugt ausgestanzt, vor. In einer anderen möglichen Ausführungsform sind Querlenker und Einrichtung separat hergestellt. Die Einrichtung wird dann nach der Herstellung mit dem Querlenker verbunden, z. B. durch Nieten oder Schrauben.

Das Kugelgelenk ist mit seinem Gehäuse von den Strukturen der Einrichtung so umschlossen, dass es fest durch Form- und Kraftschluss mit dem Querlenker verbunden ist. Über das eingepresste Kugellager ist der Querlenker mit einem Radlager eines Kraftfahrzeugs verbindbar.

Ein zweiter Aspekt der Erfindung betrifft ein Kraftfahrzeug mit einem erfindungsgemäßen Querlenker. Das erfindungsgemäße Kraftfahrzeug umfasst also einen Querlenkermit einer radseitigen Struktur zum Ankoppeln eines Rades mit einer eine Öffnung zur Aufnahme eines Kugelgelenks aufweisenden Einrichtung, wobei die Wandung der Einrichtung in einem für einen kraftschlüssigen Kontakt mit dem Kugelgelenk eine trennungstechnisch hergestellte Reduktion der Materialdicke aufweist, und bei der die Reduktion der Materialdicke nur in dem zur Bremsscheibe des anzukoppelnden Rades gerichteten Bereich ausgebildet ist.

Ein dritter Aspekt der Erfindung betrifft ein Verfahren zur Herstellung eines erfindungsgemäßen Querlenkers, umfassend die Schritte:
- Bereitstellen eines Blechs als Ausgangsmaterial,
- Bereitstellen eines Werkzeug zum Schneiden und Umformen des ausgeschnittenen Blechs,
- Schneiden eines der Grundform des Querlenkers entsprechenden Form aus dem Blech,
- Umformen des ausgeschnittenen Blechs zu einem Querlenker mit allen Lenkerelementen, umfassend eine Einrichtung zur Aufnahme eines Kugelgelenks in Einpressverbindung,
- Abtrennen von Material von der Innenseite der Wand der Einrichtung in einem für einen kraftschlüssigen Kontakt mit dem Kugelgelenk vorgesehenen Bereich,
wobei das Material nur in einem zur Bremsscheibe des anzukoppelnden Rades gerichteten Bereich abgetrennt wird.

Die Vorteile des Verfahrens entsprechen dabei denen des Querlenkers.

Die Einrichtung wird bevorzugt durch ein Durchziehen eines Ziehstempels im Material des Querlenkers geformt. Dadurch entsteht ein sogenannter Blechdurchzug. Dieses Verfahren wird auch Kragenziehen genannt. Eine weitere Möglichkeit zur Formung der Einrichtung ist das Tiefziehen.

Bevorzugt wird in dem Verfahren die Abtrennung von Material durch Abspanen durchgeführt. Dabei werden kleine Materialteile (Späne) von der Oberfläche der Innenseite abgehoben. Das Abspanen ist vergleichsweise als eine Art Hobeln vorstellbar.

Besonders bevorzugt wird das Abtrennen des Materials mittels einer zylinderartigen Vorrichtung durchgeführt, wobei der spanabhebende Bereich der Vorrichtung als ein Vorsprung aus der im übrigen Bereich kreiszylinderartig geformten Vorrichtung ausgebildet ist. Durch die kreiszylinderartige Formung der Vorrichtung kann diese in dem Durchzug geführt werden. Der Vorsprung, auch als Nase oder Zapfen bezeichnet, hat vorzugsweise eine gerundete Form. Durch die gerundete Form kann durch Abspanen eine gleichmäßig ausgebildete Vertiefung in der inneren Oberfläche der Wandung der Einrichtung erzeugt werden.

Vorzugsweise ist der Durchmesser der zylinderartigen Vorrichtung im Bereich des Vorsprungs größer als der Innenradius des Durchzugs. Der Größenunterschied ist dabei nur geringfügig, so dass die zylinderartige Vorrichtung noch in der Einrichtung gegen geringen Widerstand gleiten kann, wobei es entsprechend kleine Mengen des Materials von der Innenseite der Wand der Einrichtung abhebt. Dabei können entsprechend des sich vergrößernden Innendurchmessers des Durchzugs zylinderartige Vorrichtungen mit verschiedenen, tendenziell größeren Durchmessern verwendet werden.

Vorzugsweise umfasst das Verfahren den zusätzlichen Schritt:
- Zurückstauchen des Übergangsbereiches des Einpresssitzes von der horizontalen Ebene der Oberfläche des Querlenkers zur senkrecht dazu angeordneten Innenseite der Wand der Einrichtung.

Dabei wird der gerundete Übergangsbereich durch Kraftwirkung entgegen der Richtung z. B. des Durchzugs zurückgebogen. Dadurch wird der Radius des gerundeten Übergangsbereichs der Einrichtung vorteilhaft verringert, denn durch den geringeren Biegeradius verschiebt sich die maximale Höhe der vorgesehenen Einpressverbindung, d. h. Nähe zur Öffnung der Einrichtung bzw. zur Ebene der Oberfläche des Querlenkers. Auf diese Weise muss das Kugelgelenk weniger weit innerhalb des Einpresssitzes angebracht werden und wird der Lenkrollhalbmesser des mit dem Querlenker verbundenen Kraftfahrzeugrades günstig beeinflusst. Das Stauchen des Materials ist auch vorteilhaft, weil dadurch auch eine Materialverdichtung des Einpresssitzes bewirkt wird.

Weiterhin umfasst das Verfahren vorzugsweise den zusätzlichen Schritt:
- Entfernen der in radialer Richtung außen von der Öffnung liegenden Bereiche der Einrichtung.

Durch die Abtrennung nichtbenötigten Materials werden vorteilhafterweise der Außendurchmesser der Einrichtung und damit deren räumlicher Bedarf weiter reduziert.

Die Erfindung wird anhand der Figuren näher beschrieben. Es zeigen:
- **Figur 1**: eine Querschnittsansicht einer beispielhaften Ausführungsform eines erfindungsgemäßen Querlenkers mit einem eingepressten Kugelgelenk in einer Einrichtung zur Aufnahme des Kugelgelenks.
- **Figur 2**: eine Querschnittsansicht der Ausführungsform gemäß Fig. 1.
- **Figur 3**: eine Querschnittsansicht der Ausführungsform gemäß Fig. 1.
- **Figur 4**: eine angeschnittene Ansicht der Ausführungsform gemäß Fig. 1.
- **Figur 5**: eine Darstellung einer beispielhaften Ausführungsform eines erfindungsgemäßen Verfahrens in Querschnittsansicht.
- **Figur 6**: die Ausführungsform gemäß Fig. 5 in Querschnittsansicht von oben gesehen.
- **Figur 7**: ein Fließdiagramm der Ausführungsform gemäß Fig. 5.

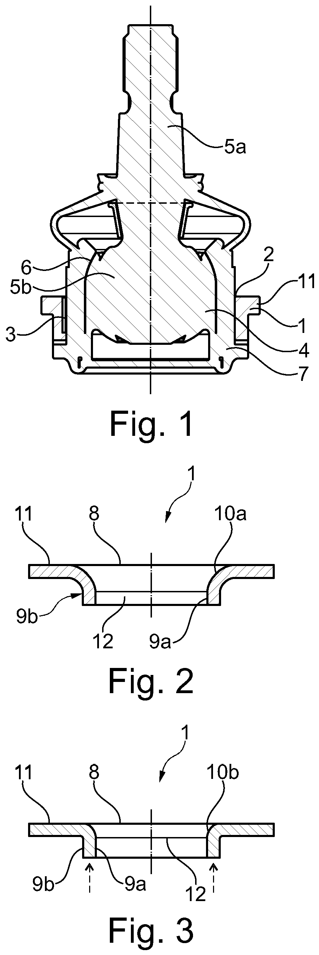

In der Darstellung von Fig. 1 ist ein Kugelgelenk 4 mit Gelenkzapfen 5a, Kugel 5b, Kugelschale 6 und Gehäuse 7 in eine beispielhafte Ausführungsform der Einrichtung 1 eines Querlenkers eines Kraftfahrzeugs zum Aufnehmen des Kugelgelenks 4 eingepresst. Die Einrichtung 1 weist dabei in einem zur Bremsscheibe des anzukoppelnden Rades gerichteten Bereich eine reduzierte Wanddicke 3 auf. Diese wurde im Ausführungsbeispiel von Fig. 1 im Bereich der Öffnung 2 hergestellt. Der Bereich mit reduzierter Wanddicke 3 kann auch in einem anderen Bereich als der Öffnung 2 der Einrichtung 1 angeordnet sein, wenn ein kraftschlüssiger Kontakt mit dem Kugelgelenk 4 in diesem entsprechenden Bereich vorgesehen ist. Dabei werden sämtliche Strukturen des Querlenkers einschließlich der Einrichtung 1 aus einer einzigen Blechplatine hergestellt. Die Strukturen des Querlenkers inklusive der Einrichtung 1 werden teilweise durch Umformen mittels Stanzen, besonders im Bereich der Einrichtung 1 auch durch Umformen durch Durchziehen, Kragenziehen und Tiefziehen, teilweise aber durch Trennverfahren wie dem Abspanen erzeugt, besonders in dem für den kraftschlüssigen Kontakt mit dem Kugelgelenk 4 vorgesehenen Bereich der Einrichtung 1. Die genannten Fertigungsverfahren können in einem Werkzeug durchgeführt werden, worin auch durch weitere Umformungsmethoden wie beispielsweise Biegen, Fließpressen und Durchdrücken ausgeführt werden können.

Die Einrichtung 1 ist z. B. als Blechdurchzug durch die Umformmethode Kragenziehen herstellbar, wodurch eine Form wie in Fig. 2 erhalten wird. Dabei wird an der Stelle der Einrichtung ein Vorloch in das Material des Querträgers gestanzt. Ausgehend von dem Vorloch, wird durch das Durchziehen eines Stempels ein Kragen gezogen.

Dabei entsteht am Übergang zwischen der horizontalen Ebene der Oberfläche des Querlenkers 8 und der zur Oberfläche des Querlenkers 8 senkrechten Innenseite der Wand 9a der Einrichtung 1 eine Rundung bzw. gerundeter Übergangsbereich 10a, dessen unterer Abschluss, markiert durch die Linie 12, die maximale Höhe der vorgesehenen Einpressverbindung definiert.

In Fig. 3 ist beispielhaft eine Ausführungsform dargestellt, in der der gerundete Übergangsbereich 10b durch Zurückstauchen, oder auch Zurückbiegen der Einrichtung, einen kleineren Radius hat als der ursprüngliche Übergangsbereich 10a. Dazu wird eine Kraft aus der Richtung der Einrichtung in die Richtung der Öffnung der Einrichtung 2, also aus der Einrichtung heraus, ausgeübt. Dieses Zurückstauchen kann ebenfalls in dem o.g. Werkzeug durchgeführt werden. Der durch die Linie 12 markierte untere Abschluss des Übergangsbereichs, der die maximale Höhe der vorgesehenen Einpressverbindung definiert, befindet sich in der zurückgestauchten Variante der Einrichtung 1 wesentlich weiter am Rand in Richtung Radaufhängung bzw. näher an der Ebene der Oberfläche des Querlenkers 8.

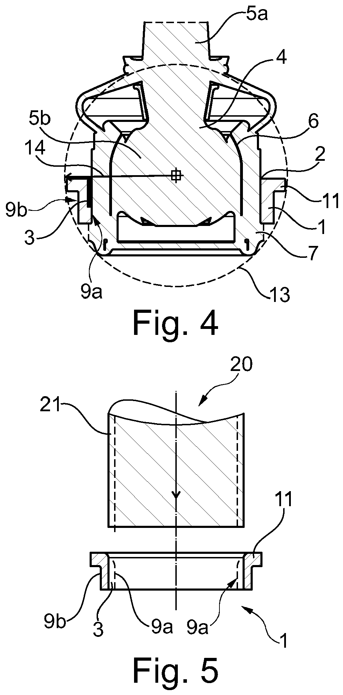

In Fig. 4 ist die Einrichtung 1 beispielhaft als Einpresssitz 1 mit einem eingepress-ten Kugelgelenk dargestellt. Dabei ist die Einrichtung 1 eine durch Kragenziehen hergestellte Röhre, die im für den kraftschlüssigen Kontakt mit dem Kugelgelenk 4 vorgesehenen Bereich an der Öffnung 2 der Einrichtung 1 eine reduzierte Wanddicke aufweist. Der Kreis 13 deutet dabei den Radius an, den die Einrichtung 1 mit dem eingepressten Kugelgelenk 4 hat. Der Pfeil 14 deutet die Entfernung von der Mitte des Kugelgelenks 4, identisch mit der Mitte der Kugel 5b, zum größten Außendurchmesser der Einrichtung 1 hin.

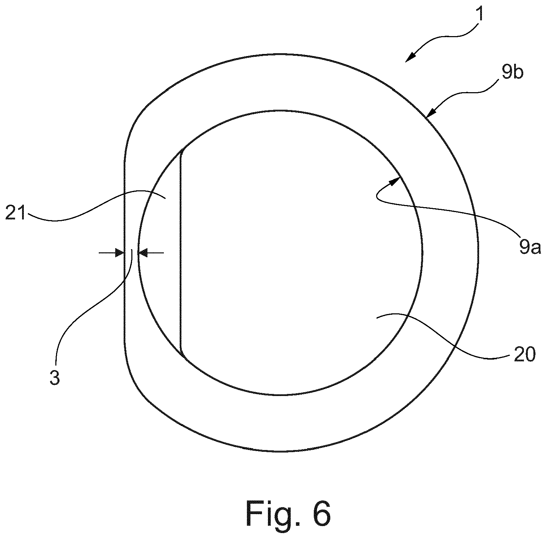

In Fig. 5 und Fig. 6 ist beispielhaft dargestellt, wie die reduzierte Wanddicke in dem zur Bremsscheibe des anzukoppelnden Rades gerichteten Bereich der Einrichtung 1 erzeugt wird. Die ursprüngliche Wanddicke in diesem Bereich, also nach dem Umformen zum Erzeugen der Einrichtung 1, aber vor dem Abspanen, ist durch die gestrichelten Linien dargestellt. Eine zylinderartige Vorrichtung 20, vorzugsweise ein Stempel 20, mit einem spanabhebenden Vorsprung 21, z. B. einer Nase oder einem Zapfen, bewirkt beispielsweise durch hin- und hergleiten in der Einrichtung 1 eine Reduktion der Wanddicke in dem Bereichs des Kontakts zwischen Vorsprung und Innenseite 9a, wobei der übrige Bereich der Innenseite 9a und die Außenseite der Wand 9b unverändert bleiben. Alternativ ist auch eine Bewegung der zylinderartigen Vorrichtung 20 nur in einer Richtung, z. B. nur von oben nach unten, möglich. Wie in den Fig. 5 und 6 zu sehen, ist dabei der Durchmesser der zylinderartigen Vorrichtung 20 im Bereich des Vorsprungs 21 größer als der durchschnittliche Innendurchmesser der Einrichtung 1. Die zylinderartige Vorrichtung 20 wird dabei gegen geringen Widerstand in der Einrichtung 1 bewegt, wobei es bei jeder Bewegung kleine Mengen des Materials von dem Kontaktbereich der Innenseite der Wand der Einrichtung 9a abhebt. So wird das Material der Einrichtung 1 in dem zur Bremsscheibe des anzukoppelnden Rades gerichteten Bereich schrittweise ausgedünnt, d. h. die Dicke der Wand der Einrichtung 1 wird an dieser Stelle reduziert. Die Menge des abgehobenen Materials richtet sich nach der Dicke der Wand der Einrichtung 1, so dass insgesamt noch eine stabile Einpressverbindung mit dem Kugelgelenk 4 möglich ist, ohne dass die Einrichtung 1 ihre strukturelle Integrität verliert. Die zylinderartige Vorrichtung 20 wird in der Einrichtung 1 bewegt, bis die gewünschte Menge abgehoben wurde, wie in Fig. 5 durch die durchgezogene Linie dargestellt. Der Wanddicke der Innenseite 9a wird dabei in dem zur Bremsscheibe des anzukoppelnden Rades gerichteten Bereich verändert. Die ursprüngliche Wanddicke beträgt vorzugsweise etwa 4 mm, kann jedoch auch höher oder geringer sein. Von der Innenseite 9a werden beispielhaft 0,1 bis 0,9 mm abgetragen, bevorzugt werden auch 1,0 mm, ebenfalls bevorzugt 1,2 mm, ebenfalls bevorzugt 1,3 mm, ebenfalls bevorzugt 1,4 mm, ebenfalls bevorzugt 1,5 mm, ebenfalls bevorzugt 1,6 mm, ebenfalls bevorzugt 1,7 mm, ebenfalls bevorzugt 1,8 mm, ebenfalls bevorzugt 1,9 mm, und ebenfalls bevorzugt 2,0 mm und weiterhin bevorzugt bis zu 3,0 mm abgetragen. Bei unterschiedlichen ursprünglichen Wanddicken der Einrichtung 1 verändern sich die abgetragenen Materialmengen im Verhältnis. Dabei kann die Reduktion der Wanddicke mittels einer einzigen zylinderartigen Vorrichtung 20 mit einem Vorsprung 21 erreicht werden, die beispielsweise Material von der Innenseite 9a von 4,0 mm auf 2,0 mm abträgt. Alternativ können aber auch verschiedene zylinderartige Vorrichtungen 20 mit unterschiedlich großen Vorsprüngen verwendet werden, um die Wanddicke stufenweise zu reduzieren.

Außenstehendes Material 11 wird entfernt, soweit es nicht zur Stabilität der Einrichtung 1 und des Querlenkers benötigt wird. Die Entfernung des außenstehenden Materials 11 wird bevorzugt durch Stanzen ausgeführt.

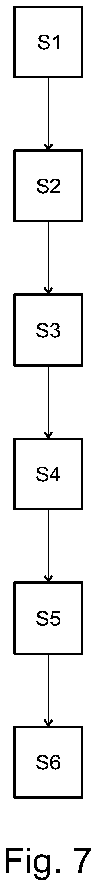

In einer beispielhaften Ausführungsform des Verfahrens wird gemäß der Darstellung in Fig. 7 in Schritt S1 ein Blech als Ausgangsmaterial bereitgestellt. In Schritt S2 wird ein Werkzeug zum Schneiden und zum Umformen des Blechs bereitgestellt. Das Werkzeug ist bevorzugt zum Stanzen ausgebildet, aber für andere Umformmethoden, beispielsweise Biegen, Fließpressen, Durchdrücken, Durchziehen, Tiefziehen und Kragenziehen. Weiterhin können mittels des Werkzeugs auch Trennungsverfahren wie beispielsweise Abspanen durchgeführt werden. Dabei sind die genannten Methoden und auch weitere Methoden miteinander kombinierbar. Bestimmte Schritte können aber auch außerhalb des Werkzeugs durchgeführt werden, z. B. das Abspanen. Dafür kann ein anderes Werkzeug bereitgestellt werden.

In einem weiteren Schritt S3 wird eine der Grundform des herzustellenden Querlenkers entsprechende Form aus dem Blech ausgeschnitten. Dabei werden die Dimensionen der auszuschneidenden Form, auch als Rohling bezeichnet, so bemessen, dass alle umzuformenden und nicht umzuformenden Bereiche des Querlenkers in dieser Form erfasst sind. Der Rohling wird aus dem Blech bevorzugt durch Stanzen ausgeschnitten, also ausgestanzt.

In Schritt S4 wird der Rohling bzw. das Blech in dem Werkzeug zu einem Querlenker mit allen Lenkerelementen mit einer Einrichtung 1 zur Aufnahme eines Kugelgelenks 4 umgeformt. Dabei wird die Einrichtung 1 bevorzugt durch Kragenziehen geformt. Alternativ ist die Einrichtung 1 beispielsweise durch Tiefziehen formbar.

In Schritt S5 wird das Material der Einrichtung 1, besonders im gerundeten Übergangsbereich 10a der Einrichtung 1 von der horizontalen Ebene der Oberfläche des Querlenkers 8 zur senkrecht dazu angeordneten Innenseite der Wand der Einrichtung 9a, zurückgestaucht. Dazu wird der Übergangsbereich 10a durch Kraftwirkung aus der Richtung der Einrichtung in die Richtung der Öffnung der Einrichtung 2, also aus der Einrichtung 1 heraus, im Grunde zurückgebogen. Dieses Zurückstauchen kann ebenfalls in dem o. g. Werkzeug durchgeführt werden. Der Radius des Übergangsbereiches 10a wird dabei zum Radius des zurückgestauchten Übergangsbereichs 10b verringert.

In Schritt S6 wird durch Bewegung der zylinderartigen Vorrichtung 20 in der Einrichtung 1 Material von der Innenseite der Wand der Einrichtung 9a in dem zur Bremsscheibe des anzukoppelnden Rades gerichteten Bereich in Form von Spänen abgehoben. Dies wird solange durchgeführt, bis eine gewünschte Erweiterung des Innendurchmessers der Einrichtung 1 in dem zur Bremsscheibe des anzukoppelnden Rades gerichteten Bereich erreicht ist. Der Schritt S6 kann auch vor dem Schritt S5 ausgeführt werden.

### Bezugszeichenliste

- 1: = Einrichtung
- 2: = Öffnung der Einrichtung
- 3: = Reduktion
- 4: = Kugelgelenk
- 5a: = Zapfen des Kugelgelenks
- 5b: = Kugel des Kugelgelenks
- 6: = Schale des Kugelgelenks
- 7: = Gehäuse des Kugelgelenks
- 8: = horizontale Ebene des Querlenkers
- 9a: = Innenseite der Wand des Einrichtung
- 9b: = Außenseite der Wand des Einrichtung
- 10a: = gerundeter Übergangsbereich der Einrichtung
- 10b: = zurückgestauchter Übergangsbereich des Einrichtung
- 11: = außenstehendes Material der Einrichtung
- 12: = maximale Höhe der Einpressverbindung
- 13: = Außendimension der Einpressverbindung
- 14: = Indikation der Entfernung vom Zentrum des Kugelgelenks zum Außendurchmesser der Einrichtung
- 20: = zylinderartige Vorrichtung
- 21: = Vorsprung der Vorrichtung

## Patentansprüche

1. Querlenker eines Kraftfahrzeugs, umfassend eine radseitige Struktur zum Ankoppeln eines Rades mit einer eine Öffnung (2) zur Aufnahme eines Kugelgelenks (4) in Einpressverbindung aufweisenden Einrichtung (1), wobei die Wandung der Einrichtung (1) in einem für einen kraftschlüssigen Kontakt mit dem Kugelgelenk (4) vorgesehenen Bereich eine in Bezug auf die Materialdicke im übrigen Bereich der Wandung der Einrichtung verringerte Materialdicke (3) in einem zur Bremsscheibe des anzukoppelnden Rades gerichteten Bereich aufweist, **dadurch gekennzeichnet, dass** die verringerte Materialdicke (3) durch eine trennungstechnisch hergestellte Vertiefung in Bezug auf den übrigen Bereich der inneren Oberfläche der Wandung der Einrichtung bei gleichmäßiger äußerer Oberfläche geformt ist.

2. Querlenker nach Anspruch 1, bei dem der für den kraftschlüssigen Kontakt mit dem Kugelgelenk (4) vorgesehene Bereich die Öffnung (2) der Einrichtung (1) ist.

3. Querlenker nach einem der vorherigen Ansprüche, wobei der Querlenker einschalig ist.

4. Querlenker nach einem der vorherigen Ansprüche, bei dem die Einrichtung (1) einstückig mit dem Querlenker geformt ist.

5. Kraftfahrzeug mit einem Querlenker gemäß einem der Ansprüche 1 - 4.

6. Verfahren zur Herstellung eines Querlenkers gemäß einem der Ansprüche 1 - 4, umfassend die Schritte:
- Bereitstellen eines Blechs als Ausgangsmaterial,
- Bereitstellen eines Werkzeugs zum Schneiden und Umformen des ausgeschnittenen Blechs,
- Schneiden eines der Grundform des Querlenkers entsprechenden Form aus dem Blech,
- Umformen des ausgeschnittenen Blechs zu einem Querlenker mit allen Lenkerelementen, umfassend eine Einrichtung zur Aufnahme eines Kugelgelenks in Einpressverbindung,
- Abtrennen von Material von der Innenseite der Wand der Einrichtung in einem für einen kraftschlüssigen Kontakt mit dem Kugelgelenk vorgesehenen Bereich,
dadurch charakterisiert, dass
das Material nur in einem zur Bremsscheibe des anzukoppelnden Rades gerichteten Bereich abgetrennt wird.

7. Verfahren nach Anspruch 6, wobei die Einrichtung durch einen Durchzug eines Ziehstempels geformt wird.

8. Verfahren nach einem der Ansprüche 6 oder 7, wobei die Abtrennung von Material durch Abspanen durchgeführt wird.

9. Verfahren nach einem der Ansprüche 6 - 8, wobei das Abtrennen des Materials mittels einer zylinderartigen Vorrichtung durchgeführt wird, wobei der spanabhebende Bereich der Vorrichtung als Vorsprung aus der im übrigen Bereich kreiszylinderartig geformten Vorrichtung ausgebildet ist.

10. Verfahren nach Anspruch 9, wobei der Durchmesser der zylinderartigen Vorrichtung im Bereich des Vorsprungs größer ist als der Innenradius des Durchzugs.

11. Verfahren nach einem der Ansprüche 6 - 10, wobei zusätzlich der Schritt umfasst ist:
- Zurückstauchen des Übergangsbereiches des Einpresssitzes von der horizontalen Ebene der Oberfläche des Querlenkers zur senkrecht dazu angeordneten Innenseite der Wand der Einrichtung.

12. Verfahren nach einem der Ansprüche 6 - 11, wobei zusätzlich der Schritt umfasst ist:
- Entfernen der in radialer Richtung außen von der Öffnung liegenden Bereiche der Einrichtung.

## Claims

1. Transverse link of a motor vehicle, comprising a wheel-side structure for the coupling-on of a wheel, having a device (1) which has an opening (2) for receiving a ball joint (4) in a press-fit connection, wherein the wall of the device (1) in a region provided for force-fitting contact with the ball joint (4) has a reduced material thickness (3), in relation to the material thickness in the remaining region of the wall of the device, in a region directed towards the brake disc of the wheel to be coupled on, **characterized in that** the reduced material thickness (3) is formed by means of a depression, produced by cutting techniques, in relation to the remaining region of the inner surface of the wall of the device in the case of a uniform outer surface.

2. Transverse link according to Claim 1, in which the region provided for the force-fitting contact with the ball joint (4) is the opening (2) of the device (1) .

3. Transverse link according to any of the preceding claims, wherein the transverse link is of single-shell form.

4. Transverse link according to any of the preceding claims, in which the device (1) is formed integrally with the transverse link.

5. Motor vehicle having a transverse link according to any of Claims 1 - 4.

6. Method for producing a transverse link according to any of Claims 1 - 4, comprising the steps:
- providing a metal sheet as starting material,
- providing a tool for cutting and deforming the cut-out metal sheet,
- cutting a shape corresponding to the basic shape of the transverse link out of the metal sheet,
- deforming the cut-out metal sheet to form a transverse link with all link elements, comprising a device for receiving a ball joint in a press-fit connection,
- cutting off material from the inner side of the wall of the device in a region intended for force-fitting contact with the ball joint,
**characterized in that**
the material is cut off only in a region directed towards the brake disc of the wheel to be coupled on.

7. Method according to Claim 6, wherein the device is formed by a rim hole of a drawing punch.

8. Method according to either of Claims 6 and 7, wherein the cutting-off of material is performed by means of a chip-removing process.

9. Method according to any of Claims 6 - 8, wherein the cutting-off of the material is performed by means of a cylindrical device, wherein the chip-removing region of the device is formed as a projection from the device which is of circular cylindrical shape in the remaining region.

10. Method according to Claim 9, wherein the diameter of the cylindrical device is greater in the region of the projection than the internal radius of the rim hole.

11. Method according to any of Claims 6 - 10, additionally comprising the step:
- backward-upsetting the transition region of the press fit from the horizontal plane of the surface of the transverse link to the inner side, arranged perpendicular thereto, of the wall of the device.

12. Method according to any of Claims 6 - 11, additionally comprising the step:
- removing those regions of the device which are situated outside the opening in a radial direction.

## Revendications

1. Bras oscillant transversal pour un véhicule automobile, comprenant une structure côté roue pour l'accouplement à un dispositif (1) présentant une ouverture (2) pour recevoir une rotule (4) dans un accouplement à ajustement serré, la paroi du dispositif (1) présentant, dans une région prévue pour un contact par engagement par force avec la rotule (4), une épaisseur de matériau (3) réduite par rapport à l'épaisseur de matériau dans le reste de la région de la paroi du dispositif dans une région orientée vers le disque de frein de la roue à accoupler, **caractérisé en ce que** l'épaisseur de matériau réduite (3) est formée par un renfoncement fabriqué par une technique de séparation par rapport au reste de la région de la surface intérieure de la paroi du dispositif, la surface extérieure étant uniforme.

2. Bras oscillant transversal selon la revendication 1, dans lequel la région prévue pour le contact par engagement par force avec la rotule (4) est l'ouverture (2) du dispositif (1).

3. Bras oscillant transversal selon l'une quelconque des revendications précédentes, dans lequel le bras oscillant transversal est monocoque.

4. Bras oscillant transversal selon l'une quelconque des revendications précédentes, dans lequel le dispositif (1) est formé d'une seule pièce avec le bras oscillant transversal.

5. Véhicule automobile comprenant un bras oscillant transversal selon l'une quelconque des revendications 1 à 4.

6. Procédé de fabrication d'un bras oscillant transversal selon l'une quelconque des revendications 1 à 4, comprenant les étapes suivantes :
- fourniture d'une tôle en tant que matériau de départ,
- fourniture d'un outil de coupe et de façonnage de la tôle découpée,
- découpe d'une forme correspondant à la forme de base du bras oscillant transversal à partir de la tôle,
- façonnage de la tôle découpée pour former un bras oscillant transversal avec tous les éléments de bras oscillant, comprenant un dispositif pour recevoir une rotule dans un accouplement à ajustement serré,
- séparation du matériau du côté intérieur de la paroi du dispositif dans une région prévue pour un contact par engagement par force avec la rotule,
**caractérisé en ce que**
le matériau est seulement séparé dans une région orientée vers le disque de frein de la roue à accoupler.

7. Procédé selon la revendication 6, dans lequel le dispositif est formé par un trou d'emboutissage d'un poinçon d'emboutissage.

8. Procédé selon l'une quelconque des revendications 6 ou 7, dans lequel la séparation de matériau est effectuée par enlèvement de copeaux.

9. Procédé selon l'une quelconque des revendications 6 à 8, dans lequel la séparation du matériau est effectuée au moyen d'un dispositif de type cylindre, la région d'enlèvement de copeaux du dispositif étant réalisée sous forme de saillie à partir du dispositif formé sous forme cylindrique circulaire dans la région restante.

10. Procédé selon la revendication 9, dans lequel le diamètre du dispositif de type cylindre dans la région de la saillie est supérieur au diamètre intérieur du trou d'emboutissage.

11. Procédé selon l'une quelconque des revendications 6 à 10, comprenant en outre l'étape suivante :
- rétro-compression de la région de transition du siège d'ajustement serré du plan horizontal de la surface du bras oscillant transversal vers le côté intérieur de la paroi du dispositif disposé perpendiculairement à celle-ci.

12. Procédé selon l'une quelconque des revendications 6 à 11, comprenant en outre l'étape suivante :
- enlèvement des régions du dispositif situées dans la direction radiale à l'extérieur de l'ouverture.
